# FASCICULE DE BREVET EUROPEEN

(11) **EP 4 169 604 B1**
(45) Date de publication et mention de la délivrance du brevet: **22.05.2024**
(21) Numéro de dépôt: 22196623.7
(22) Date de dépôt: 20.09.2022
(51) Int. Cl.: B01D 53/75, B01D 53/00, B01D 53/26

(54) **PROCÉDÉ ET APPAREIL DE TRAITEMENT D'UN GAZ RICHE EN DIOXYDE DE CARBONE CONTENANT DE L'EAU**
VERFAHREN UND VORRICHTUNG ZUR BEHANDLUNG EINES WASSERHALTIGEN KOHLENDIOXIDREICHEN GASES
METHOD AND APPARATUS FOR TREATING A CARBON DIOXIDE RICH GAS CONTAINING WATER

(30) Priorité: 21.10.2021 FR 2111205
(43) Date de publication de la demande: 26.04.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ANDRICH, Marine, 94503 CHAMPIGNY SUR MARNE (FR); CALORO, Gian Luigi, 94503 CHAMPIGNY SUR MARNE (FR)
(74) Mandataire: Air Liquide

(56) Documents cités:
- EP-A1- 0 661 416
- CN-A- 108 314 196
- FR-A1- 2 950 925

## Description

La présente invention est relative à un procédé de traitement d'un gaz riche en dioxyde de carbone contenant de l'eau. Le gaz peut contenir au moins un autre gaz acide que le dioxyde de carbone.

Un gaz riche en dioxyde de carbone contient au moins 10% mol. de dioxyde de carbone ou au moins 50% mol de dioxyde de carbone, voire au moins 80% mol de dioxyde de carbone. Les fumées des bruleurs d'un reformeur à méthane et à vapeur d'eau (connu sous l'acronyme SMR) produisent un gaz contenant 10% mol de CO₂ ainsi qu'environ 70% d'azote.

L'invention s'applique au traitement, par exemple la compression, le lavage, le refroidissement ou le séchage, de tout gaz riche en dioxyde de carbone contenant éventuellement au moins un autre gaz acide, tel que NO, NO₂, SO₂, SO₃.

Le gaz peut être issu d'une combustion, par exemple une oxycombustion, de la fermentation, d'un PSA d'élimination d'hydrogène, d'une aciérie, d'une cimenterie, de la production d'ammoniac, de chaux ou d'oxyde d'éthylène.

Il peut être du gaz naturel ou du biométhane contenant également du méthane dans les deux cas.

US4542114 décrit l'élimination des autres gaz acides présents dans un gaz riche en dioxyde de carbone par compression, les gaz acides se trouvant concentrés dans les condensats d'eau produits lors de la compression. L'eau acidifiée formée n'est pas utilisée.

« Industrial Gases Processing », de Häring éd. Wiley VCH 2008 décrit l'envoi d'eau condensée dans un compresseur de gaz riche en dioxyde de carbone comme déchet ("waste water system"). Ceci a inévitablement pour résultat d'envoyer de l'acide dans les égouts, ce qui présente des dangers pour l'environnement.

US2002/0144506 décrit la condensation d'eau dans le dioxyde de carbone comprimé dans un compresseur après refroidissement, l'eau étant ensuite envoyée à la combustion.

FR2950925 divulgue le traitement d'un gaz riche en dioxyde de carbone contenant de l'eau et des autres gaz acides tels que le NO₂ et le SO₂, dans lequel on récupère des condensats aqueux avec un fort taux d'acidité, qui sont utilisés comme fluide d'aide à l'extraction d'un produit pétrolifère.

L'hydrogène est un vecteur énergétique qui joue un rôle croissant dans la décarbonation de différents secteurs, notamment les transports et l'industrie. L'hydrogène peut être produit à partir de la réaction de reformage du gaz naturel (dans des fours SMR - « Steam Méthane Reforming » ou reformage de méthane à la vapeur d'eau) ou par électrolyse de l'eau. L'électrolyse de l'eau a l'avantage de ne pas produire de gaz à effet de serre mais consomme beaucoup d'électricité (décarbonée si possible). Dans les SMR, la production d'hydrogène s'accompagne d'une production importante de CO₂. Une unité de capture CO₂ peut être ajoutée à un SMR afin de réduire l'empreinte carbone de la production d'hydrogène par SMR. La capture de CO₂ (e.g. traitement et liquéfaction CO₂ pour usage alimentaire ou pour séquestration) peut être réalisée par voie cryogénique ou par voie non cryogénique (par exemple, lavage aux amines).

Le CO₂ produit lors de la combustion (par traitement de gaz de combustion à l'air ou à l'oxygène) contient quelque NOₓ. La réaction d'oxydation du NO en NO₂ est lente, tandis que les autres réactions et notamment les réactions d'hydrolyse du NO₂ et N₂O₃ en présence d'eau sont rapides et équilibrées :

2 NO + O2 ⇔ 2 NO₂

3 NO₂ + H₂O ⇔ 2 HNO₃, + NO

NO + NO₂ ⇔ N₂O₃

N₂O₃ + H₂O ⇔ 2 HNO₂

Ainsi lorsque le CO₂ contient de l'eau et des NOₓ, des condensats acides sont formés dans le procédé du fait de la formation de HNO₃ et HNO₂ dans l'eau condensée (par exemple) condensation partielle entre deux étages de compression du CO₂ humide, condensation partielle du produit de régénération du sécheur de type TSA, condensats de la tour de lavage à l'eau dans le cas où le pH n'est pas remonté trop haut pour abattre les SOₓ).

D'ailleurs même dans le cas où le gaz riche en dioxyde de carbone ne contient pas d'autre gaz acide (donc pas de NOx), le lavage à l'eau de ce gaz ou son refroidissement ou son séchage peut produire une eau acidifiée.

De plus, un réseau d'eau de refroidissement est généralement utilisé sur l'unité de traitement du gaz riche en CO₂ pour refroidir le fluide comprimé en sortie des étages de compression et en amont du sécheur. Cette eau a tendance progressivement à entartrer les échangeurs de chaleur, les rendant ainsi moins performants. L'entartrage des échangeurs à eau peut être limité en conservant un pH acide (pH < 7) dans l'eau de refroidissement. Une unité de traitement d'eau ou une injection d'un acide (e.g. H₂SO₄) permet de maintenir le pH acide de l'eau et de limiter l'entartrage. Selon les cas, en particulier selon la dureté de l'eau, un pH plus élevée peut-être désiré, par exemple un pH<8,5 ou <8.

Selon un objet de l'invention, il est prévu un procédé de traitement d'un gaz riche en dioxyde de carbone contenant de l'eau et éventuellement au moins un autre gaz acide dans lequel :
a) le gaz est comprimé dans au moins un étage de compression, refroidi et au moins un condensat est séparé du gaz refroidi après au moins un étage de compression, de préférence entre deux étages de compression, le condensat étant constitué par de l'eau dans laquelle le CO₂ et/ou l'au moins un autre gaz acide est dissous formant de l'eau acidifiée ayant un pH d'au plus 6,5 et/ou
b) le gaz riche en dioxyde de carbone est épuré, éventuellement en amont de la compression de l'étape a), dans une unité de lavage à l'eau pour produire un gaz épuré éventuellement à envoyer à la compression et de l'eau contenant des impuretés et/ou
c) le gaz, éventuellement comprimé dans l'étape a), est séché dans une unité de séchage et de l'eau contenue dans le gaz éventuellement comprimé est récupérée formant de l'eau
   récupérée,
   caractérisé en ce que :
   i) au moins une partie de l'eau acidifiée de l'étape a) et/ou
   ii) au moins une partie de l'eau contenant des impuretés de l'étape b) et/ou
   iii) au moins une partie de l'eau récupérée de l'étape c)
   est/sont mélangée(s) avec de l'eau circulant dans un circuit de refroidissement pour former un mélange avec un degré d'acidité désiré, de préférence ayant un pH inférieur à 8,5, voire inférieur à 7, de préférence supérieur à -2. Selon d'autres aspects facultatifs :
   - le mélange sert à refroidir un échangeur de chaleur à contact indirect.
   - l'échangeur de chaleur est de type à plaques et à ailettes en aluminium brasé ou plaques et ondes ou à tubes et à calandre.
   - l'échangeur de chaleur sert à refroidir du gaz riche en dioxyde de carbone comprimé dans l'étape a), en aval d'au moins un étage de compression, et/ou à épurer dans l'étape c).
   - le sécheur fonctionne par adsorption d'eau et est régénéré périodiquement par un gaz de régénération sec qui quitte l'unité d'adsorption y ayant récupéré de l'eau accumulée dans l'unité de séchage.
   - l'échangeur de chaleur sert à refroidir le gaz de régénération ayant récupéré l'eau dans l'unité de séchage, l'eau ainsi condensée constituant l'eau récupérée de l'étape c).
   - le sécheur sèche le gaz en le comprimant et/ou en le refroidissant pour condenser l'eau qu'il contient.
   - le degré d'acidité désiré est supérieur à un pH de 1 ou supérieur à un pH de 3.
   - l'au moins un autre gaz acide est choisi dans le groupe : SO₂, SO₃, H₂S, HCl, NO, N₂O, NO₂, N₂O₄, HNO₃, HNO₂, H₂CO₃.
   - on rajoute dans l'eau du circuit de refroidissement un débit acide provenant d'un stockage.
   - on règle le débit d'eau du débit ou des débits i) et/ou ii) et/ou iii) pour obtenir un pH désiré dans le circuit de refroidissement.
   - au moins un débit i), ii) ou iii) ayant un premier pH est mélangé avec un autre de ces trois débits ayant un deuxième pH différent du premier pH.
   - on règle le débit acide provenant du stockage ainsi qu'au moins un des débits i) et/ou ii) et/ou iii) pour obtenir un pH désiré dans le circuit de refroidissement.
   - l'au moins un des débits i) et/ou ii) et/ou iii) a un premier pH différent de celui du débit acide.
   - l'au moins un des débits i) et/ou ii) et/ou iii) a un premier pH supérieur à celui du débit acide.
   - l'au moins un des débits i) et/ou ii) et/ou iii) a un premier pH inférieur à celui du débit acide.
   - le gaz riche en dioxyde de carbone est épuré en amont de la compression dans l'unité de lavage à l'eau pour produire un gaz épuré et de l'eau contenant des impuretés et la température et/ou le débit d'eau de lavage envoyée à la tour de refroidissement est/sont ajusté(s) afin de varier le débit et/ou l'acidité de l'eau contenant des impuretés envoyées au circuit de refroidissement.
   - le circuit de refroidissement sert à refroidir un gaz comprimé dans un étage de compression, pouvant être celui de l'étape a) ou un étage de compression d'un gaz produit en traitant un gaz traité dans au moins une des étapes a) et/ou b) et/ou c).
   - le rajout de l'eau i) et/ou ii) et/ou iii) peut augmenter ou réduire le degré d'acidité de l'eau circulant dans le circuit de refroidissement.
   - le circuit de refroidissement contient de l'eau de refroidissement ayant un pH entre 6 et 8, voire entre 6,5 et 7,5 avant d'être mélangé avec l'au moins un des débits i), ii) ou iii).

Selon un autre objet de l'invention, il est prévu un appareil de traitement d'un gaz riche en dioxyde de carbone contenant de l'eau et éventuellement au moins un autre gaz acide comprenant :
a) au moins un étage de compression pour comprimer le gaz, des moyens de refroidissement pour refroidir le gaz comprimé et condenser au moins partiellement l'eau qu'il contient et des moyens pour séparer au moins un condensat du gaz refroidi, les moyens pour séparer étant disposés après au moins un étage de compression, de préférence entre deux étages de compression, le condensat étant constitué par de l'eau dans laquelle le CO₂ et/ou l'au moins un autre gaz acide est dissous formant de l'eau acidifiée ayant un pH d'au plus 6,5 et/ou
b) une unité de lavage à l'eau pour produire un gaz épuré, éventuellement à envoyer à la compression, et de l'eau contenant des impuretés et/ou
c) une unité de séchage ainsi que des moyens pour récupérer l'eau enlevée par le séchage.
caractérisé en ce qu'il comprend des moyens pour mélanger :
i) au moins une partie de l'eau acidifiée de l'option a) et/ou
ii) au moins une partie de l'eau contenant des impuretés de l'option b) et/ou
iii) au moins une partie de l'eau récupérée de l'option c)
avec de l'eau circulant dans un circuit de refroidissement pour former un mélange avec un degré d'acidité désiré, de préférence ayant un pH inférieur à 8, 5, voire inférieur à 7, de préférence supérieur à -2.

Selon d'autres caractéristiques optionnelles, l'appareil comprend :
- des moyens pour envoyer le mélange refroidir un échangeur de chaleur à contact indirect.
- l'échangeur de chaleur est de type à plaques et à ailettes en aluminium brasé ou plaques et ondes ou à tubes et à calandre.
- l'échangeur de chaleur est agencé pour refroidir du gaz riche en dioxyde de carbone comprimé dans l'étape a), en aval d'au moins un étage de compression, et/ou à épurer dans l'étape c).
- le sécheur comprend plusieurs lits d'adsorption d'eau ainsi que des moyens pour envoyer périodiquement par un gaz de régénération sec à un des lits et des moyens pour sortir du lit le gaz de régénération ayant récupéré de l'eau accumulée dans l'unité de séchage.
- l'échangeur de chaleur est agencé pour refroidir le gaz de régénération ayant récupéré l'eau dans l'unité de séchage, l'eau ainsi condensée constituant l'eau récupérée de l'étape c).
- le sécheur comprend des moyens de compression et/ou de refroidissement pour condenser l'eau contenue dans le gaz à sécher.
- des moyens pour rajouter dans l'eau du circuit de refroidissement un débit acide provenant d'un stockage.
- un stockage d'un acide relié au circuit de refroidissement
- des moyens pour régler le débit d'eau du débit ou des débits i) et/ou ii) et/ou iii) afin d'obtenir un pH désiré dans le circuit de refroidissement.
- des moyens pour mélanger au moins un débit i), ii) ou iii) ayant un premier pH avec un autre de ces trois débits ayant un deuxième pH différent du premier pH.
- des moyens pour régler le débit acide provenant du stockage ainsi qu'au moins un des débits i) et/ou ii) et/ou iii) pour obtenir un pH désiré dans le circuit de refroidissement.
- des moyens pour envoyer le gaz riche en dioxyde de carbone s'épuré, éventuellement en amont de la compression, dans l'unité de lavage à l'eau pour produire un gaz épuré et de l'eau contenant des impuretés
- des moyens pour ajuster la température d'eau de lavage envoyée à la tour de refroidissement afin de varier le débit et/ou l'acidité de l'eau contenant des impuretés envoyée au circuit de refroidissement.
- des moyens pour ajuster le débit d'eau de lavage envoyée à la tour de refroidissement afin de varier le débit et/ou l'acidité de l'eau contenant des impuretés envoyée au circuit de refroidissement.
- le circuit de refroidissement est agencé pour refroidir un gaz comprimé dans un étage de compression, pouvant être celui de l'étape a) ou un étage de compression d'un gaz produit en traitant un gaz traité dans au moins une des étapes a) et/ou b) et/ou c).

La présente invention consiste à injecter au moins une partie des condensats acides générés par un procédé de traitement du gaz riche en CO₂ et éventuellement comportant du HNO₃ ou HNO₂ dans le réseau d'eau de refroidissement afin de maintenir un pH inférieur à 8,5, voire à 8, voire à 7 plutôt que ou en complément d'injecter du H₂SO₄ ou autre acide dans le réseau d'eau. Cela permet de limiter la consommation d'acide à injecter et/ou réduire le coût d'investissement et/ou d'opération de l'unité de traitement de l'eau de refroidissement.

Ainsi, une solution selon l'invention est d'injecter l'eau acidifiée condensée en aval d'au moins un refroidisseur intermédiaire et/ou du refroidisseur final d'un compresseur d'un gaz riche en dioxyde de carbone dans un réseau d'eau de refroidissement plutôt que dans la tour de lavage à l'eau ou à la batterie limite du client.

Dans beaucoup de cas, le gaz comprimé dans le compresseur est ensuite séché dans un sécheur à plusieurs lits d'adsorption qui doivent régulièrement être régénéré pour éliminer l'eau qui s'y accumule. Le gaz de régénération envoyé au sécheur en sort chargé de vapeur d'eau. En condensant cette vapeur, l'eau produit peut également être envoyée à un circuit d'eau de refroidissement.

De préférence, le gaz de régénération, généralement pris dans une unité de séparation en aval du sécheur, peut être mélangé avec un gaz provenant d'un étage intermédiaire ou final du compresseur, de sorte que l'eau condensée est un mélange d'eau présente à l'entrée du compresseur et d'eau provenant du gaz de régénération. Alternativement le séchage du gaz peut être réalisé simplement en refroidissant le gaz riche en dioxyde de carbone pour faire condenser l'eau, l'eau récupérée pouvant être envoyée au circuit de refroidissement.

Le circuit d'eau de refroidissement peut également être alimenté par de l'eau condensée dans la tour de lavage à l'eau en amont du compresseur (si présente). Cette eau sera acidifiée du fait de la présence de gaz acides dans le gaz à laver. Une partie des NOx et/ou SOx que le gaz riche en dioxyde de carbone contient sera éliminée dans la tour par lavage à l'eau et l'eau accumulant en cuve de la tour contient les acides dissous dans l'eau de lavage.

Il sera donc compris que l'acidité de l'eau du circuit de refroidissement peut être régulée en y rajoutant de l'eau d'au moins une source, l'eau pouvant provenir de la tour de refroidissement du gaz riche en CO₂ et/ou de la compression du gaz riche en CO₂ et/ou du sécheur, par exemple du gaz de régénération du sécheur de gaz riche en CO₂ comprimé.

Ces sources d'eau peuvent avoir des niveaux d'acidité différents et il devient donc possible en dosant la quantité d'eau envoyée d'une ou plusieurs sources potentielles de réguler le niveau d'acidité dans le circuit d'eau de refroidissement.

La solution alternative serait de rajouter de l'acide (par exemple de l'acide sulfurique) dans le circuit d'eau afin d'éviter la formation de calcaire dans les circuits, cette solution nécessitant d'apporter et de stocker un acide sur site.

Or la présente invention peut dans certains cas éviter d'avoir à gérer une source d'acide d'en dehors du site, tout en réglant le problème économique et surtout environnemental de la gestion des déchets acides.

La présente invention peut également s'appliquer à l'utilisation des condensats de la purge de la tour de lavage à l'eau en amont de la compression par exemple dans le réseau d'eau de refroidissement de l'unité si la composition et le pH des condensats le permettent ; Si la tour de lavage à l'eau ou une autre colonne dédiée permet également d'abattre les SOx, selon la quantité d'ions accumulés dans la purge en cas d'abattement des SOx avec l'ajout de soude ou autre solution basique, l'eau de purge obtenue sera basique. Dans ce cas, l'eau de purge pourrait être rajoutée à l'eau du circuit de réfrigération pour la rendre plus basique ou pour corriger une acidité excessive.

Le circuit de réfrigération de préférence sert à refroidir un gaz en sortie d'un étage de compression d'un compresseur, pouvant être un compresseur du gaz riche en dioxyde de carbone ou un compresseur d'un produit d'un appareil de séparation du gaz riche en dioxyde de carbone, situé par exemple en aval du sécheur (si présent) et/ou en aval du compresseur du gaz riche en dioxyde de carbone, si présent.

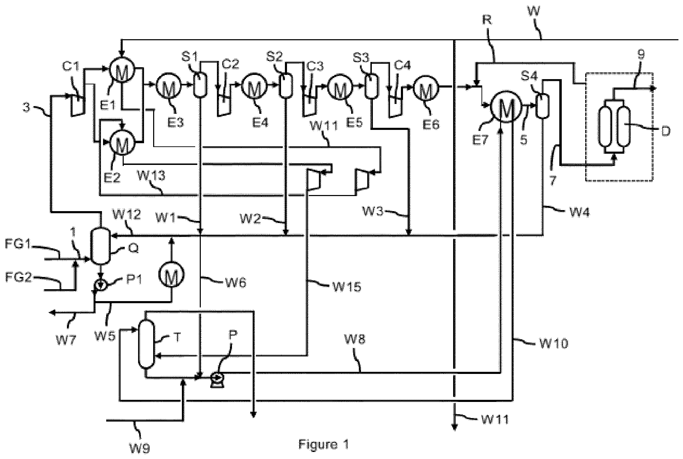

L'invention sera décrite de manière plus détaillée en se référant à la figure. [FIG. 1] illustre un procédé selon l'invention.

Dans [FIG. 1], le gaz riche en dioxyde de carbone peut provenir de n'importe laquelle source capable de produire un tel gaz. Ici deux débits de gaz de combustion FG1 et FG2 sont mélangés pour former le gaz riche en dioxyde de carbone 1 contenant par exemple au moins 10% mol de CO₂, au moins 40% mol de CO₂, au moins 80% mol de CO₂ ou au moins 90% mol de CO₂. Ce gaz est envoyé dans une tour de lavage à l'eau Q alimentée en haut par de l'eau sous pression, W12, capable d'absorber au moins un gaz acide présent dans le gaz riche en dioxyde de carbone, par exemple SO₂, SO₃, NO₂, NO, N₂O, HNO₃, HNO₂, CO₂.... La tour de lavage Q peut également opérer à la pression atmosphérique ou sousatmosphérique. Le débit d'eau W12 envoyé en haut de la tour peut être varié afin de régler le débit et/ou l'acidité du liquide formé en cuve de la tour Q.

L'eau en cuve de la tour Q est acidifiée et peut être pompée par une pompe P1. Une partie W5 est éventuellement mélangée avec l'eau W12 et le reste W7 peut être envoyée selon l'invention vers le circuit de refroidissement pour en varier le niveau acidité (non-illustré dans la figure).

Le gaz riche en dioxyde de carbone 3 épuré dans la tour Q est dans cet exemple comprimé dans un compresseur C1 puis divisé en deux et refroidi dans deux échangeurs de chaleur E1, E2 par échange de chaleur indirect avec des débits d'azote différents W13 ou avec un autre frigorigène, tel que de l'eau. Ensuite les débits de gaz sont réunis et refroidis dans l'échangeur E3 pour condenser une partie de l'eau contenue dans le gaz. Cette eau contiendra de l'acide carbonique sous une forme dissoute et/ou de l'acide sulfurique et/ou d'acide sulfureux et/ou de l'acide nitrique, et/ou de l'acide nitreux. Elle est séparée du gaz dans un séparateur S1 ou par un autre moyen équivalent, dont le condensat W1 est soutiré en cuve de séparateur S1. Le gaz est de nouveau comprimé dans un compresseur C2, refroidi dans un échangeur de chaleur E4 et l'eau formée est séparée dans un séparateur de phases S2 ou un autre moyen équivalent dont le condensat W2 est soutiré en cuve. Le gaz du séparateur S2 est de nouveau comprimé dans un compresseur C3, refroidi dans un échangeur de chaleur E5 et l'eau formée est séparée dans un séparateur de phases S3 dont le condensat W3 est soutiré en cuve. Le gaz du séparateur S3 ou un autre moyen équivalent est comprimé par un compresseur C4 puis est refroidi par un échangeur de chaleur E6 et ensuite dans un échangeur E7 pour condenser encore de l'eau. Cette eau dans le gaz 5 est enlevée dans le séparateur S4 ou un autre moyen équivalent pour former un gaz 7 et de l'eau condensée W4.

Le gaz 7 est ensuite séché dans un sécheur D qui peut être une unité d'adsorption. Le gaz séché 9 peut ensuite servir comme produit sec ou être épuré par un autre moyen tel qu'une autre unité d'adsorption et/ou une membrane et/ou une unité de séparation à température inférieure à 0°C, par exemple par condensation partielle et/ou distillation.

Si le sécheur D opère par adsorption, il sera nécessaire de le régénérer en y envoyant un gaz sec de régénération. Ce gaz R sort du sécheur chargé d'eau et peut être mélangé avec le débit 5, ici entre les échangeurs E6, E7, le point de mélange dépendant de la quantité d'eau contenue et de la température du gaz R. Il va de soi que la composition du gaz R doit être compatible avec l'usage définitif du gaz 9. Il peut par exemple être riche en dioxyde de carbone.

Il sera compris que le sécheur n'opère pas nécessairement par adsorption. Le gaz 7 peut simplement être refroidi et/ou pressurisé pour condenser l'eau qu'il contient, cette eau acidifiée étant récupérée comme débit R pour alimenter le cycle de refroidissement.

Les débits d'eau W1, W2, W3, W4 sont mélangés pour former un débit d'eau contenant au moins un gaz acide dissous. Le mélange formé peut néanmoins ne contenir qu'au moins deux des débits mélangés. Sinon seul un débit W1, W2, W3, W4 peut être récupéré. Au moins une partie de l'eau récupérée (mélangée ou pas) est envoyée à l'eau d'un cycle de réfrigération.

Dans le cas de l'exemple l'eau est envoyée comme débit W6 à l'échangeur de chaleur E7 où se refroidit le gaz 5 en aval de l'échangeur E6, ici mélangé avec le gaz de régénération R.

Ainsi l'eau récupérée en S4 vient partiellement du gaz de régénération R.

Ici l'eau W6 n'est pas refroidie en amont de l'échangeur E7. Néanmoins il est possible de la refroidir comme par exemple dans la tour de refroidissement T.

La possibilité de varier un débit envoyé rejoindre le circuit d'eau et/ou mélanger au moins deux débits permet de compenser des niveaux d'acidité trop élevé ou trop bas. Par exemple si un des débits W1 à W4 ou W7 a un niveau d'acidité exceptionnellement élevé, il peut servir néanmoins pour alimenter le cycle de refroidissement, en réduisant son débit et/ou en le mélangeant avec un débit moins acide.

Un circuit d'azote W sert à refroidir l'échangeur E1 et l'échangeur E2 éventuellement après détente dans une turbine. L'azote W15 détendu dans la turbine alimente une tour T par le bas. En remontant la tour, il refroidit l'eau W10 envoyée en tête de tour, produisant un débit d'azote réchauffé en tête de tour qui est rejeté à l'atmosphère et de l'eau refroidie en cuve qui alimente le circuit de refroidissement. Un débit d'azote W11 peut être envoyé à l'air. Par exemple si l'azote W arrive trop froid ou s'il n'y a pas besoin de refroidir beaucoup le débit d'eau W10 on fonction de combien de chaleur est apporté par l'échangeur de chaleur E7 dans le circuit de refroidissement, on n'envoie pas tout l'azote dans la tour T mais la partie W11 peut être envoyée directement à l'atmosphère. Ceci constitue une façon de régler la température de l'eau W8 provenant de la tour T.

Il sera compris que le type précis de circuit d'azote n'est pas important et pour cette raison il n'est pas décrite de manière détaillée.

Il est à noter que le circuit d'eau de refroidissement est optionnellement alimenté par un débit d'acide W9, pouvant être de l'acide sulfurique et/ou ayant un pH inférieur à 7. Cet envoi d'acide peut être supprimé ou réduit puisque le circuit d'eau est acidifié par de l'eau provenant d'au moins une de trois sources, à savoir :
- la tour de lavage Q, quand présente, dont le condensat W7 peut être mélangé au circuit d'eau.
- le gaz de régénération R, quand présent, dont l'eau peut être séparée en le mélangeant avec le gaz à sécher ou pas.
- au moins un des étages de compression C1, C2, C3, C4 après refroidissement et condensation partielle.

Il est à noter que les compresseurs C1, C2, C3, C4 peuvent chacun être constitué par au moins un étage d'un compresseur.

La tour Q peut être alimentée par de l'eau provenant d'au moins un des compresseurs C1 à C4 pour former le débit W12. Ce débit W12 peut autrement être complètement indépendant.

Il est possible de réguler le débit et/ou l'acidité du débit W12 en variant le débit et/ou l'acidité du débit W12. Le débit peut être varié par une vanne sur le débit W12. Sinon au moins un des débits W1, W2, W3 peut être régulé par une vanne. Comme les débits W1, W2, W3 pourront avoir des niveaux d'acidité différents, ceci peut suffire pour varier l'acidité de la purge d'eau enlevée en cuve de colonne.

L'eau ayant servi à refroidir l'échangeur de chaleur E7 peut être envoyée à une tour de lavage T en tête de celle-ci pour être refroidie par un débit d'azote W15.

L'acide W9, si présent, est de préférence mélangé au liquide de cuve de la tour T et ensuite l'eau formée est mélangée au débit W6.

L'eau dans le gaz R est récupérée de manière astucieuse en mélangeant le gaz R au gaz comprimé entre les échangeurs E6 et E7, de sorte que l'échangeur E7 refroidit le gaz R et le séparateur S4 récupère l'eau provenant du compresseur et du gaz de régénération R.

Le cycle de refroidissement alimenté par l'eau d'au moins une des sources a), b), c) peut être celui du compresseur de la source a) ou un autre compresseur, par exemple un compresseur de produit d'un appareil de séparation alimenté par le gaz riche en dioxyde de carbone.

Dans l'exemple de la figure, de l'eau est prise dans la tour de lavage, le compresseur de gaz lavé et le sécheur du gaz provenant du compresseur pour alimenter le circuit de refroidissement.

Néanmoins il sera compris que la tour de lavage, le compresseur et le sécheur ne sont pas nécessairement tous présents.

Par exemple, le procédé peut être uniquement un procédé de lavage (et l'appareil une tour de lavage avec moyens associés) produisant de l'eau acidifiée pour acidifier de l'eau d'un circuit de refroidissement. Dans ce cas, le compresseur et/ou le sécheur n'est pas présent. Donc la tour de lavage peut produire un gaz à traiter par compression et/ou séchage.

De même le procédé peut être uniquement un procédé de séchage (et l'appareil un sécheur avec moyens associés) produisant de l'eau acidifiée pour acidifier de l'eau d'un circuit de refroidissement. Dans ce cas, le compresseur et/ou la tour de lavage n'est pas présent. Donc le sécheur peut sécher un gaz provenant de la compression du gaz à sécher et/ou du lavage dans une tour de lavage pour produire le gaz à traiter par séchage.

Le circuit de refroidissement peut refroidir du gaz issu d'un étage de compression pouvant être le gaz épuré dans la tour de lavage et/ou du gaz à sécher dans le sécheur. Sinon il peut refroidir un circuit de refroidissement indépendant des étapes a), b et c).

## Revendications

1. Procédé de traitement d'un gaz (1,3,7) riche en dioxyde de carbone contenant de l'eau et éventuellement au moins un autre gaz acide dans lequel :
a) le gaz est comprimé dans au moins un étage de compression (C1, C2, C3, C4), refroidi et au moins un condensat (W1, W2, W3, W4) est séparé du gaz refroidi (5) après au moins un étage de compression, de préférence entre deux étages de compression, le condensat étant constitué par de l'eau dans laquelle le CO₂ et/ou l'au moins un autre gaz acide est dissous formant de l'eau acidifiée ayant un pH d'au plus 6,5 et/ou
b) le gaz riche en dioxyde de carbone est épuré, éventuellement en amont de la compression de l'étape a), dans une unité de lavage à l'eau (Q) pour produire un gaz épuré (3) éventuellement à envoyer à la compression et de l'eau (W7) contenant des impuretés et/ou
c) le gaz (7), éventuellement comprimé dans l'étape a), est séché dans une unité de séchage (D) et de l'eau contenue dans le gaz éventuellement comprimé est récupérée formant de l'eau récupérée (W4),
**caractérisé en ce que**
i) au moins une partie de l'eau acidifiée (W1, W2, W3, W4) de l'étape a) et/ou
ii) au moins une partie de l'eau (W7) contenant des impuretés de l'étape b) et/ou
iii) au moins une partie de l'eau récupérée (W4) de l'étape c)
est/sont mélangée(s) avec de l'eau circulant dans un circuit de refroidissement (W8, W10) pour former un mélange (W8) avec un degré d'acidité désiré, de préférence ayant un pH inférieur à 8,5, voire inférieur à 7.

2. Procédé selon la revendication 1 dans lequel le mélange (W8) sert à refroidir un échangeur de chaleur à contact indirect (E7).

3. Procédé selon la revendication 2 dans lequel l'échangeur de chaleur (E7) est de type à plaques et à ailettes en aluminium brasé ou plaques et ondes ou à tubes et à calandre.

4. Procédé selon la revendication 2 ou 3 dans lequel l'échangeur de chaleur (E7) sert à refroidir du gaz riche en dioxyde de carbone comprimé (5) dans l'étape a), en aval d'au moins un étage de compression, et/ou à épurer (7) dans l'étape c).

5. Procédé selon l'une des revendications 2 à 4 dans lequel le sécheur (D) fonctionne par adsorption d'eau et est régénéré périodiquement par un gaz de régénération sec (R) qui quitte l'unité d'adsorption y ayant récupéré de l'eau accumulée dans l'unité de séchage.

6. Procédé selon la revendication 2 et 5 dans lequel l'échangeur de chaleur (E7) sert à refroidir le gaz de régénération (R) ayant récupéré l'eau dans l'unité de séchage (D), l'eau ainsi condensée (W4) constituant l'eau récupérée de l'étape c).

7. Procédé selon l'une des revendications précédentes dans lequel l'au moins un autre gaz acide est choisi dans le groupe : SO₂, SO₃, H₂S, HCl, NO, N₂O, NO₂, N₂O₄, HNO₃, HNO₂, H₂CO₃.

8. Procédé selon l'une des revendications précédentes dans lequel on rajoute dans l'eau du circuit de refroidissement un débit acide (W9) provenant d'un stockage.

9. Procédé selon des revendications précédentes dans lequel on règle le débit d'eau du débit ou des débits i) et/ou ii) et/ou iii) (W1, W2, W3, W4, W7) pour obtenir un pH désiré dans le circuit de refroidissement.

10. Procédé selon les revendications 8 et 9 dans lequel on règle le débit acide (W9) provenant du stockage ainsi qu'au moins un des débits i) et/ou ii) et/ou iii) (W1, W2, W3, W4, W7) pour obtenir un pH désiré dans le circuit de refroidissement.

11. Procédé selon l'une des revendications précédentes dans lequel le gaz riche en dioxyde de carbone (3) est épuré en amont de la compression dans l'unité de lavage à l'eau (Q) pour produire un gaz épuré (3) et de l'eau contenant des impuretés (W7) et la température et/ou le débit d'eau de lavage (W12) envoyée à la tour de refroidissement est/sont ajusté(s) afin de varier le débit et/ou l'acidité de l'eau contenant des impuretés envoyées au circuit de refroidissement.

12. Procédé selon l'une des revendications précédentes dans lequel le circuit de refroidissement (W8, W10) sert à refroidir un gaz (5) comprimé dans un étage de compression (C1, C2, C3, C4), pouvant être celui de l'étape a) ou un étage de compression d'un gaz produit en traitant un gaz traité dans au moins une des étapes a) et/ou b) et/ou c).

13. Appareil de traitement d'un gaz (1,3,7) riche en dioxyde de carbone contenant de l'eau et éventuellement au moins un autre gaz acide comprenant:
a) au moins un étage de compression (C1, C2, C3, C4), pour comprimer le gaz, des moyens de refroidissement (E1, E2, E3, E4, E5, E6, E7) pour refroidir le gaz comprimé et condenser au moins partiellement l'eau qu'il contient et des moyens pour séparer au moins un condensat du gaz refroidi (S1, S2, S3, S4, S4), les moyens pour séparer étant disposés après au moins un étage de compression, de préférence entre deux étages de compression, le condensat étant constitué par de l'eau (W1, W2, W3, W4) dans laquelle le CO2 et/ou l'au moins un autre gaz acide est dissous formant de l'eau acidifiée ayant un pH d'au plus 6,5 et/ou
b) une unité de lavage à l'eau (Q) pour produire un gaz épuré (3), éventuellement à envoyer à la compression, et de l'eau contenant des impuretés (W7) et/ou
c) une unité de séchage (D) ainsi que des moyens pour récupérer l'eau (W4) enlevée par le séchage
**caractérisé en ce qu'**il comprend des moyens pour mélanger
i) au moins une partie de l'eau acidifiée de l'option a) et/ou
ii) ii) au moins une partie de l'eau contenant des impuretés de l'option b) et/ou
iii) au moins une partie de l'eau récupérée de l'option c)
avec de l'eau (W8) circulant dans un circuit de refroidissement pour former un mélange avec un degré d'acidité désiré, de préférence ayant un pH inférieur à 8,5, voire inférieur à 7.

## Patentansprüche

1. Verfahren zur Behandlung eines kohlendioxidreichen Gases (1,3,7), das Wasser und gegebenenfalls mindestens ein weiteres saures Gas enthält, bei dem:
a) das Gas in mindestens einer Kompressionsstufe (C1, C2, C3, C4) komprimiert wird, gekühlt wird und mindestens ein Kondensat (W1, W2, W3, W4) von dem gekühlten Gas (5) nach mindestens einer Kompressionsstufe, bevorzugt zwischen zwei Kompressionsstufen, abgetrennt wird, wobei das Kondensat aus Wasser besteht, in dem das CO₂ und/oder das mindestens eine weitere saure Gas gelöst ist, so dass gesäuertes Wasser gebildet wird, das einen pH-Wert von höchstens 6,5 aufweist, und/oder
b) das kohlendioxidreiche Gas, gegebenenfalls stromauf der Kompression des Schritts a), in einer Wasserwascheinheit (Q) gereinigt wird, um ein gereinigtes Gas (3), das gegebenenfalls zu der Kompression zu leiten ist, und Wasser (W7), das Verunreinigungen enthält, zu erzeugen, und/oder
c) das Gas (7), das gegebenenfalls im Schritt a) komprimiert wurde, in einer Trocknungseinheit (D) getrocknet wird und Wasser, das in dem gegebenenfalls komprimierten Gas enthalten ist, zurückgewonnen wird und zurückgewonnenes Wasser (W4) bildet,
**dadurch gekennzeichnet, dass**
i) mindestens ein Teil des gesäuerten Wassers (W1, W2, W3, W4) aus Schritt a) und/oder
ii) mindestens ein Teil des Wassers (W7), das Verunreinigungen enthält, aus Schritt b) und/oder
iii) mindestens ein Teil des zurückgewonnenen Wassers (W4) aus Schritt c)
mit Wasser gemischt wird/werden, das in einem Kühlkreislauf (W8, W10) zirkuliert, um ein Gemisch (W8) mit einem gewünschten Säuregrad zu bilden, das bevorzugt einen pH-Wert unter 8,5 oder sogar unter 7 aufweist.

2. Verfahren nach Anspruch 1, bei dem das Gemisch (W8) dazu dient, einen Wärmetauscher mit indirektem Kontakt (E7) zu kühlen.

3. Verfahren nach Anspruch 2, bei dem der Wärmetauscher (E7) vom Typ mit Platten und Rippen aus gelötetem Aluminium oder mit Platten und Wellen oder mit Rohrbündeln ist.

4. Verfahren nach Anspruch 2 oder 3, bei dem der Wärmetauscher (E7) dazu dient, im Schritt a) komprimiertes kohlendioxidreiches Gas, stromab mindestens einer Kompressionsstufe, zu kühlen (5) und/oder im Schritt c) zu reinigen (7).

5. Verfahren nach einem der Ansprüche 2 bis 4, bei dem der Trockner (D) mit Wasseradsorption arbeitet und periodisch durch ein trockenes Regenerationsgas (R) regeneriert wird, das die Adsorptionseinheit verlässt, nachdem es dort in der Trocknungseinheit gesammeltes Wasser zurückgewonnen hat.

6. Verfahren nach Anspruch 2 und 5, bei dem der Wärmetauscher (E7) dazu dient, das Regenerationsgas (R) zu kühlen, welches das Wasser in der Trocknungseinheit (D) zurückgewonnen hat, wobei das so kondensierte Wasser (W4) das zurückgewonnene Wasser des Schritts c) bildet.

7. Verfahren nach einem der vorhergehenden Ansprüche, bei dem das mindestens eine weitere saure Gas gewählt ist aus der Gruppe: SO₂, SO₃, H₂S, HCl, NO, N₂O, NO₂, N₂O₄, HNO₃, HNO₂, H₂CO₃.

8. Verfahren nach einem der vorhergehenden Ansprüche, bei dem man dem Wasser des Kühlkreislaufs eine Säuremenge (W9) zugibt, die aus einem Speicher stammt.

9. Verfahren nach vorhergehenden Ansprüchen, bei dem man die Wassermenge der Menge oder der Mengen i) und/oder ii) und/oder iii) (W1, W2, W3, W4, W7) regelt, um einen gewünschten pH-Wert in dem Kühlkreislauf zu erhalten.

10. Verfahren nach den Ansprüchen 8 und 9, bei dem man die aus dem Speicher stammende Säuremenge (W9) sowie mindestens eine der Mengen i) und/oder ii) und/oder iii) (W1, W2, W3, W4, W7) regelt, um einen gewünschten pH-Wert in dem Kühlkreislauf zu erhalten.

11. Verfahren nach einem der vorhergehenden Ansprüche, bei dem das kohlendioxidreiche Gas (3) stromauf der Kompression in der Wasserwascheinheit (Q) gereinigt wird, um ein gereinigtes Gas (3) und Wasser (W7), das Verunreinigungen enthält, zu erzeugen, und die Temperatur und/oder die zum Kühlturm geleitete Waschwassermenge (W12) angepasst wird/werden, um die Menge und/oder die Azidität des Wassers zu ändern, das Verunreinigungen enthält, die zum Kühlkreislauf geleitet werden.

12. Verfahren nach einem der vorhergehenden Ansprüche, bei dem der Kühlkreislauf (W8, W10) dazu dient, ein Gas (5) zu kühlen, das in einer Kompressionsstufe (C1, C2, C3, C4) komprimiert wurde, die diejenige des Schritts a) sein kann, oder einer Kompressionsstufe für ein Gas, das erzeugt wird, in dem Gas behandelt wird, das in mindestens einem der Schritte a) und/oder b) und/oder c) behandelt wurde.

13. Gerät zur Behandlung eines kohlendioxidreichen Gases (1,3,7), das Wasser und gegebenenfalls mindestens ein weiteres saures Gas enthält, umfassend:
a) mindestens eine Kompressionsstufe (C1, C2, C3, C4), um das Gas zu komprimieren, Kühlmittel (E1, E2, E3, E4, E5, E6, E7), um das komprimierte Gas zu kühlen und das Wasser, das es enthält, mindestens teilweise zu kondensieren, und Mittel, um mindestens ein Kondensat von dem gekühlten Gas abzutrennen (S1, S2, S3, S4, S4), wobei die Mittel zum Abtrennen nach mindestens einer Kompressionsstufe, bevorzugt zwischen zwei Kompressionsstufen, angeordnet sind, wobei das Kondensat aus Wasser (W1, W2, W3, W4) besteht, in dem das C02 und/oder das mindestens eine weitere saure Gas gelöst ist, so dass gesäuertes Wasser gebildet wird, das einen pH-Wert von höchstens 6,5 aufweist, und/oder
b) eine Wasserwascheinheit (Q), um ein gereinigtes Gas (3), das gegebenenfalls zu der Kompression zu leiten ist, und Wasser (W7), das Verunreinigungen enthält, zu erzeugen, und/oder
c) eine Trocknungseinheit (D) sowie Mittel, um das durch das Trocknen entfernte Wasser (W4) zurückzugewinnen,
**dadurch gekennzeichnet, dass** es Mittel umfasst, um zu mischen
i) mindestens einen Teil des gesäuerten Wassers der Option a) und/oder
ii) mindestens einen Teil des Verunreinigungen enthaltenden Wassers der Option b) und/oder
iii) mindestens einen Teil des zurückgewonnenen Wassers der Option c)
mit Wasser (W8), das in einem Kühlkreislauf zirkuliert, um ein Gemisch mit einem gewünschten Säuregrad zu bilden, das bevorzugt einen pH-Wert unter 8,5 oder sogar unter 7 aufweist.

## Claims

1. Process for the treatment of a gas (1,3,7) rich in carbon dioxide containing water and optionally at least one other acid gas, in which:
a) the gas is compressed in at least one compression stage (C1, C2, C3, C4) and cooled, and at least one condensate (W1, W2, W3, W4) is separated from the cooled gas (5) after at least one compression stage, preferably between two compression stages, the condensate consisting of water in which the CO₂ and/or the at least one other acid gas is dissolved, forming acidified water having a pH of at most 6.5, and/or
b) the gas rich in carbon dioxide is purified, optionally upstream of the compression of step a), in a unit for washing with water (Q), so as to produce a purified gas (3), optionally to be sent to compression, and water (W7) containing impurities, and/or
c) the gas (7), optionally compressed in step a), is dried in a drying unit (D) and water contained in the optionally compressed gas is recovered, forming recovered water (W4),
**characterized in that**:
i) at least a portion of the acidified water (W1, W2, W3, W4) of step a) and/or
ii) at least a portion of the water (W7) containing impurities of step b) and/or
iii) at least a portion of the recovered water (W4) of step c)
is/are mixed with water circulating in a cooling circuit (W8, W10), so as to form a mixture (W8) with a desired degree of acidity, preferably having a pH of less than 8.5, indeed even of less than 7.

2. Process according to Claim 1, in which the mixture (W8) serves to cool an indirect-contact heat exchanger (E7) .

3. Process according to Claim 2, in which the heat exchanger (E7) is of brazed aluminium plate-fin type or of corrugated plate type or of shell-and-tube type.

4. Process according to Claim 2 or 3, in which the heat exchanger (E7) serves to cool gas rich in carbon dioxide compressed (5) in step a), downstream of at least one compression stage, and/or to be purified (7) in step c).

5. Process according to one of Claims 2 to 4, in which the dryer (D) operates by water adsorption and is periodically regenerated by a dry regeneration gas (R) which leaves the adsorption unit having recovered therein water accumulated in the drying unit.

6. Process according to Claim 2 and Claim 5, in which the heat exchanger (E7) serves to cool the regeneration gas (R) which has recovered the water in the drying unit (D), the water thus condensed (W4) constituting the recovered water of step c).

7. Process according to one of the preceding claims, in which the at least one other acid gas is chosen from the group: SO₂, SO₃, H₂S, HCl, NO, N₂O, NO₂, N₂O₄, HNO₃, HNO₂, H₂CO₃.

8. Process according to one of the preceding claims, in which an acid flow (W9) originating from storage is added to the water of the cooling circuit.

9. Process according to preceding claims, in which the flow of water of the flow or flows i) and/or ii) and/or iii) (W1, W2, W3, W4, W7) is adjusted so as to obtain a desired pH in the cooling circuit.

10. Process according to Claims 8 and 9, in which the acid flow (W9) originating from storage and also at least one of the flows i) and/or ii) and/or iii) (W1, W2, W3, W4, W7) are adjusted so as to obtain a desired pH in the cooling circuit.

11. Process according to one of the preceding claims, in which the gas rich in carbon dioxide (3) is purified upstream of the compression in the unit for washing with water (Q) so as to produce a purified gas (3) and water containing impurities (W7), and the temperature and/or the flow rate of washing water (W12) sent to the cooling tower is/are adjusted in order to vary the flow rate and/or the acidity of the water containing impurities sent to the cooling circuit.

12. Process according to one of the preceding claims, in which the cooling circuit (W8, W10) serves to cool a gas (5) compressed in a compression stage (C1, C2, C3, C4), which can be that of step a) or a stage of compression of a gas produced by treating a gas treated in at least one of steps a) and/or b) and/or c).

13. Apparatus for the treatment of a gas (1,3,7) rich in carbon dioxide containing water and optionally at least one other acid gas, comprising:
a) at least one compression stage (C1, C2, C3, C4), for compressing the gas, cooling means (E1, E2, E3, E4, E5, E6, E7) for cooling the compressed gas and at least partially condensing the water which it contains, and means for separating at least one condensate from the cooled gas (S1, S2, S3, S4, S4), the separating means being placed after at least one compression stage, preferably between two compression stages, the condensate consisting of water (W1, W2, W3, W4) in which the CO₂ and/or the at least one other acid gas is dissolved, forming acidified water having a pH of at most 6.5, and/or
b) a unit for washing with water (Q) so as to produce a purified gas (3), optionally to be sent to compression, and water containing impurities (W7), and/or
c) a drying unit (D) and also means for recovering the water (W) removed by the drying,
**characterized in that** it comprises means for mixing:
i) at least a portion of the acidified water of option a) and/or
ii) at least a portion of the water containing impurities of option b) and/or
iii) at least a portion of the recovered water of option c)
with water (W8) circulating in a cooling circuit so as to form a mixture with a desired degree of acidity, preferably having a pH of less than 8.5, indeed even of less than 7.
